# EUROPEAN PATENT SPECIFICATION

(11) **EP 1 514 782 B1**
(45) Date of publication and mention of the grant of the patent: **19.11.2008**
(21) Application number: 04255495.6
(22) Date of filing: 10.09.2004
(51) Int. Cl.: B62J 17/00

(54) **Air flow control system of motorcycle**
Luftströmungssteuerungsgerät für Motorrad
Système de réglage du débit d'air pour motocyclette

(30) Priority: 12.09.2003 JP 2003321668
(43) Date of publication of application: 16.03.2005
(73) Proprietor: KAWASAKI JUKOGYO KABUSHIKI KAISHA, Kobe 650-8670 (JP)
(72) Inventor: Idei, Shoji, Kakogawa-shi Hyogo 675-0111 (JP); Ino, Seiichi, Kakogawa-shi Hyogo 675-0034 (JP)
(74) Representative: Cross, James Peter Archibald

(56) References cited:
- EP-A2- 1 170 201
- DE-A1- 3 420 352
- DE-A1- 3 609 595
- US-B1- 6 641 196

## Description

### BACKGROUND OF THE INVENTION

### Field of the Invention

The present invention relates to an air flow control system of a motorcycle, which is capable of varying air resistance applied to the motorcycle while a rider is travelling on the motorcycle.

### Description of the Related Art

Conventionally, wind-proof cowlings, or fairings, have been employed on various types of motorcycle. The cowling is typically composed of one or a plurality of parts manufactured from synthetic resin or FRP (fiber reinforced plastic), and mounted on the motorcycle to cover at least a part of a body of the motorcycle. The cowling serves to control air flow in various ways according to its shape. Specifically, the cowling can reduce the wind resistance of the motorcycle in order to reduce fuel consumption. In addition, the cowling can reduce the wind pressure felt by the rider to reduce the fatigue felt by the rider.

The rider may wish to feel the wind or to avoid feeling wind pressure while riding the motorcycle. However, the conventional cowling does not meet such a demand, because of its fixed shape formed by manufacture.

DE 34 20 352 A1 describes a motorcycle fairing according to the preamble of claim 1 with lateral fairing parts that can be moved laterally inwards or outwards, wherein the lateral fairing parts are adjusted according to the travelling speed of the motorcycle or by a hand operable switch.

Japanese Utility Model Application Publication No. Hei. 3 - 26060 discloses a cowling provided with a passage which allows inside and outside (an ambient side) to communicate with each other. This prior art cowling allows ambient air to be drawn into an engine within the cowling and an exhaust gas of the engine to be discharged outside the cowling while the motorcycle is travelling, but does not serve to control the wind pressure felt by the rider.

### SUMMARY OF THE INVENTION

The present invention addresses the above described condition, and an object of the present invention is to provide an air flow control system capable of varying the wind pressure felt by the rider by changing the flow of air flowing along the body of a motorcycle, or at least provide an alternative to existing products.

According to one aspect of the invention, there is provided an air flow control system in accordance with claim 1.

In a preferred embodiment, an air flow control system of a motorcycle comprises a flap configured to cover a part of a body of the motorcycle, and a drive device configured to drive the flap, wherein the drive device is configured to drive the flap such that the flap changes an air flow along the body of the motorcycle during travelling. In such a construction, by driving the flap, the air flow along the body can be changed, and thereby a rider can feel wind or avoid a wind pressure while travelling on the motorcycle.

The air flow control system may further comprise a cowling configured to cover a side portion of a front portion of the body, wherein the flap is configured to change the air flow along the cowling. In such a construction, the air flow in the vicinity of a lower body of the rider can be substantially changed.

The flap may include an air flow control plate, and may be configured to vary its state between a closed configuration and an open configuration, wherein in the closed configuration of the flap, an outer surface of the air flow control plate and an outer surface of a portion of the cowling which is located rearward relative to the air flow control plate extend along substantially a plane, and in the open configuration of the flap, the outer surface of the air flow control plate is located outward relative to the outer surface of the cowling. In such a construction, in the closed configuration of the flap, the flap and the cowling extend along substantially the same plane to allow the air flowing from forward to be smoothly guided rearward, while in the open configuration of the flap, the air flowing along the side portion of the body is guided to flow slightly outward away from the cowling to allow the wind pressure applied to the lower body of the rider to be reduced.

The flap may be pivotable around a vicinity of a front end portion thereof such that a rear end portion thereof moves close to or away from the cowling.

The drive device may be capable of adjusting an open position of the flap steplessly. Such a construction can meet the rider's further demand, since the air flow can be adjusted steplessly.

The flap may include a support portion provided in the vicinity of the front end portion of the air flow control plate and pivotally supported by the cowling, and an arm portion extending from the air flow control plate inward relative to the cowling and connected to the drive device.

The above and further objects and features of the invention will be more fully be apparent from the following detailed description with accompanying drawings.

### BRIEF DESCRIPTION OF THE DRAWINGS

Fig. 1 is a side view of a motorcycle equipped with an air flow control system according to an embodiment of the present invention;

Fig. 2 is a view of a left flap and a right flap of the motorcycle in Fig. 1, as seen from the inner side of the motorcycle;

Fig. 3 is a view of the left flap taken in the direction of arrow IIIa in Fig. 2 and a view of the right flap taken in the direction of arrow IIIb in Fig. 2, as seen from the front side of the motorcycle;

Fig. 4 is a cross-sectional view taken along line IV - IV in Fig. 1, showing an air flow control system including the left flap and the right flap in a closed configuration and a drive device configured to drive these flaps;

Fig. 5 is a view of the left flap and the right flap in an open configuration in the air flow control system in Fig. 4;

Fig. 6 is a side view of the motorcycle with the left flap and the right flap in the open configuration; and

Fig. 7 is a cross-sectional view taken along line VII-VII in Fig. 1, showing another air flow control system capable of steplessly adjusting open positions of the left flap and the right flap.

### DETAILED DESCRIPTION OF THE PREFERRED EMBODIMENTS

Hereinafter, an air flow control system of a motorcycle according to an embodiment of the present invention will be described with reference to the drawings.

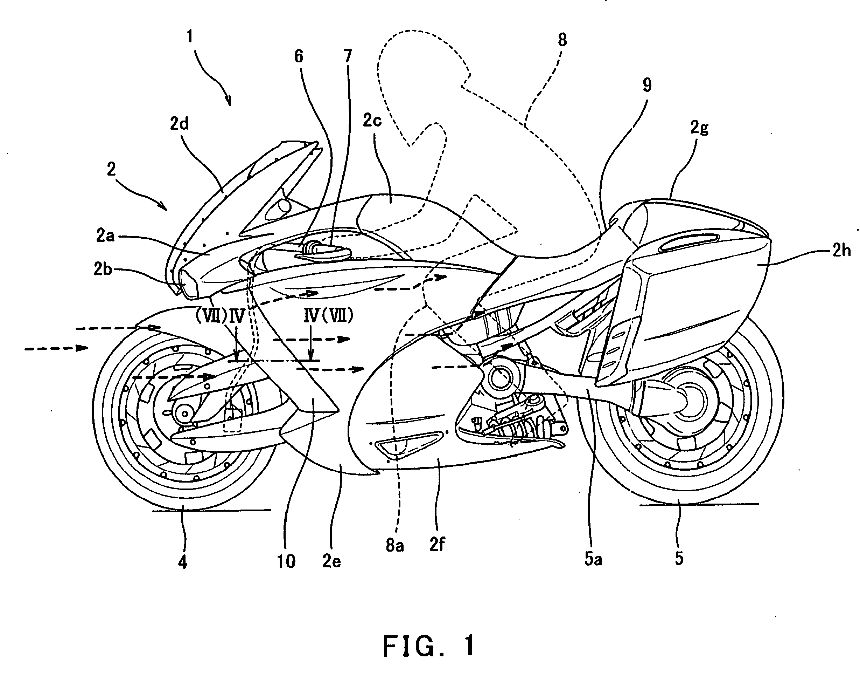

Fig. 1 is a side view of a motorcycle 1. Referring to Fig. 1, the motorcycle 1 is equipped with a cowling 2, and has a front wheel 4 and a rear wheel 5 as a drive wheel at front and rear positions in a longitudinal direction of a body of the motorcycle 1. The rear wheel 5 is rotatably mounted at a rear end portion of a swing arm 5a extending in the longitudinal direction. A front end portion of the swing arm 5a is connected to an engine (not shown) mounted in the body of the motorcycle 1 to allow the swing arm 5a to be pivotable around the front end portion. A drive shaft (not shown) is stored within the swing arm 5a. An output shaft of the engine is coupled to the drive shaft through a bevel gear or the like to allow rotation of the engine to be transmitted to the rear wheel 5 through the drive shaft.

A handle bar 6 is attached substantially above the front wheel 4. The handle bar 6 has grips 7 at end portions thereof. A seat 9 is disposed forward and above the rear wheel 5. As represented by a broken line, a rider 8 straddles the seat 9 and grips the grips 7 to steer the motorcycle 1. As used herein, the term indicating direction means a direction seen from the perspective of the rider 8 riding on the motorcycle 1.

As shown in Fig. 1, the cowling 2 is composed of a plurality of parts and equipped on the body of the motorcycle 1. Specifically, an upper cowling 2a extends in the longitudinal direction to cover the handle bar 6 from above, and a pair of right and left head lights 2b are provided on a front portion of the upper cowling 2a. A tank cover 2c is provided between the upper cowling 2a and the seat 9 to cover a fuel tank (not shown) from above. The upper cowling 2a and the tank cover 2c are integrally curved upward such that the position at which the upper cowling 2a and the tank cover 2c are connected to each other becomes highest. A wind shield (or screen) 2d is provided on an upper portion of the upper cowling 2a to extend upward and rearward. The wind shield 2d serves to reduce a wind pressure applied to an upper body of the rider 8 travelling on the motorcycle 1.

A side cowling 2e is provided below the upper cowling 2a and the tank cover 2c to cover right and left side portions of a front portion of the body. The side cowling 2e is inverted-triangle shaped such that its pointed portion on the lower side is located in the vicinity of a lower end of the body of the motorcycle 1 and its upper line extends in the longitudinal direction below the handle bar 10 as seen in a side view. The side cowling 2e is slightly curved outward such that a distance between right and left parts thereof gradually increases to a position in the direction from the front to the rear and then gradually decreases as the side cowling 2e is closer to the rear of the body to allow the air flowing from forward to be smoothly guided rearward during travelling. The rider 8 riding on the motorcycle 1 sandwiches rear portion of the side cowling 2e with right and left knees. A lower cowling 2f is provided below the side cowling 2e to cover side portions of the engine (not shown) and a lower portion of the body.

A rear seat cover 2g is provided on a rear portion of the body and behind the seat 9. The rear seat cover 2g functions as a back rest of the rider 8. Side bags 2h are provided on right and left sides of the rear seat cover 2g and are capable of storing tools or other instruments.

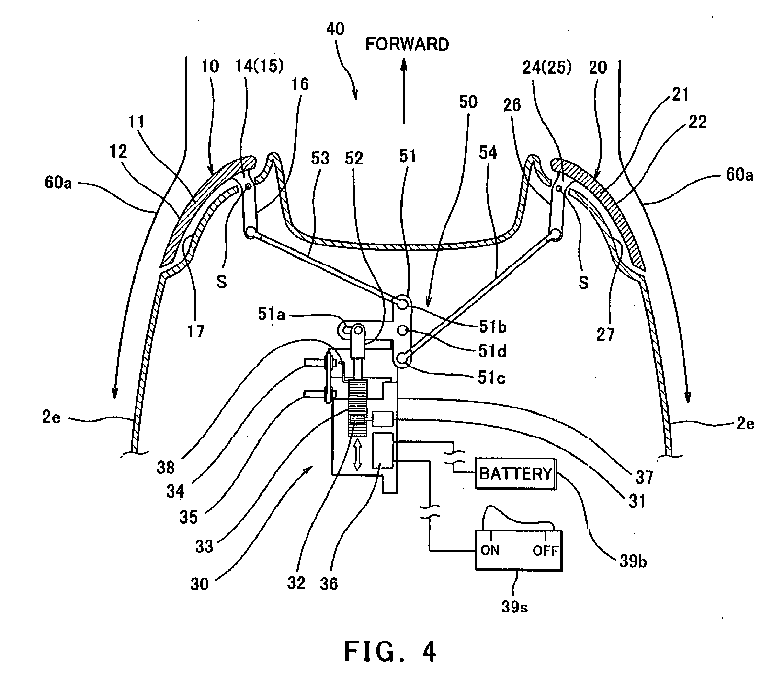

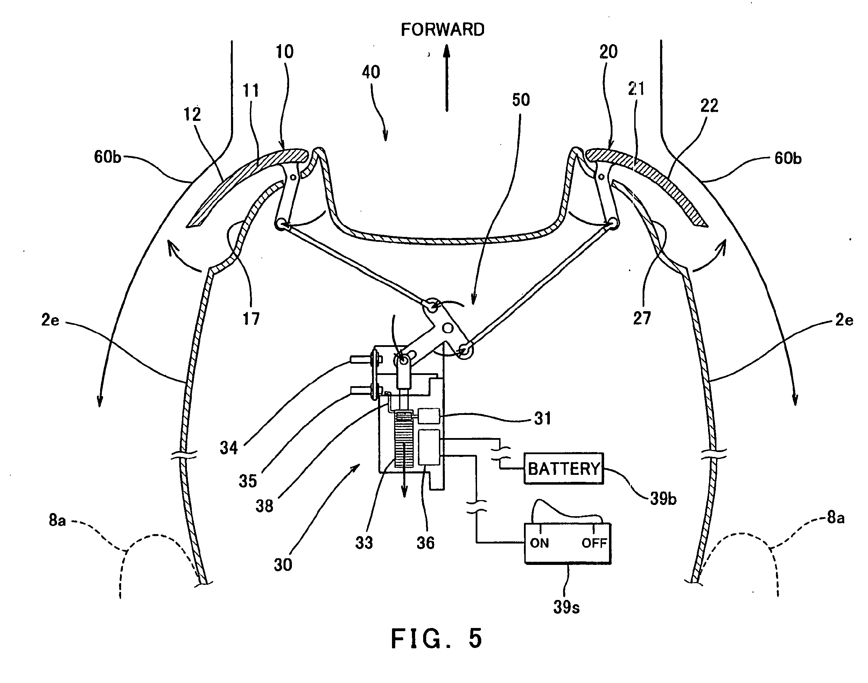

As shown in Fig. 1, a left flap 10 is provided on the left side of a front portion of the side cowling 2e. As shown in Figs. 4 and 5, a right flap 20 is provided on the right side of the front portion of the side cowling 2e such that the left flap 10 and the right flap 20 are laterally symmetric.

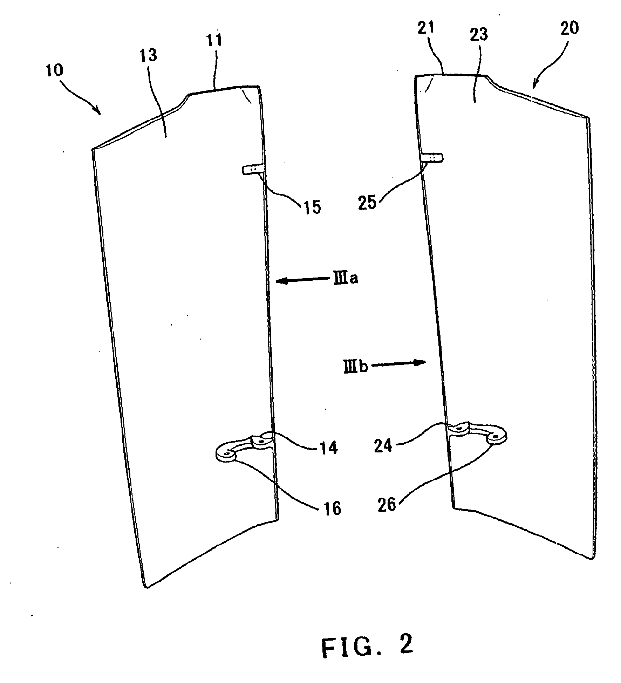

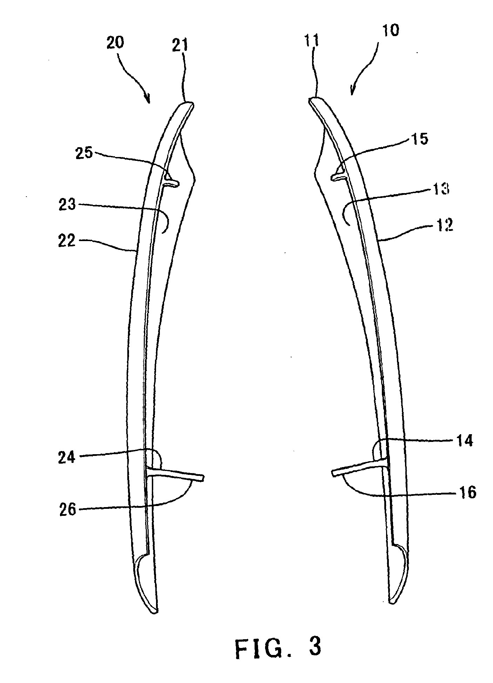

Fig. 2 is a view of the left flap 10 and the right flap 20, as seen from the inner side of the motorcycle 1. Fig. 3 is a view of the left flap 10 taken in the direction of arrow IIIa in Fig. 2 and a view of the right flap 20 taken in the direction of arrow IIIb in Fig. 2, as seen from the front side of the motorcycle 1. As shown in Fig. 2, the left flap 10 has an air flow control plate 11, which has a substantially smooth outer surface and is generally rectangular in shape, elongated in the vertical direction. As shown in Fig. 3, the outer surface 12 is slightly curved outward to form a convex surface. Two mounting brackets, i.e., a lower bracket 14 and an upper bracket 15 are provided to protrude from an inner surface 13 of the air flow control plate 11 in the vicinity of one (front side) of long sides of the air flow control plate 11 so as to be vertically spaced apart from each other. An arm 16 extends from the lower mounting bracket 14.

As shown in Fig. 2, the right flap 20 and the left flap 10 are laterally symmetric in shape. So, the right flap 20 has an air flow control plate 21, which has a substantially smooth outer surface 22 and is generally rectangular in shape, elongated in the vertical direction. As shown in Fig. 3, the outer surface 22 is slightly curved outward to form a convex surface. Two mounting brackets, i.e., a lower bracket 24 and an upper bracket 25 are provided to protrude from an inner surface 23 of the air flow control plate 21 in the vicinity of one (front side) of long sides of the air flow control plate 21 so to be vertically spaced apart from each other. An arm 26 extends from the lower mounting bracket 24.

Fig. 4 is a cross-sectional view taken in the direction of arrows along line IV-IV in Fig. 1, showing an air flow control system 40 including the left flap 10, the right flap 20, and a drive device 30 stored within the side cowling 2e and configured to drive these flaps 10 and 20. As shown in Fig. 4, the left flap 10 is provided on the left side of the front portion of the side cowling 2e with the long side where the mounting brackets 14 and 15 are mounted directed forward. The mounting brackets 14 and 15 are coupled to the side cowling 2e to allow the left flap 10 to be pivotable. Specifically, the left flap 10 is configured such that the air flow control plate 11 extending rearward from the brackets 14 and 15 is pivotable around a pivot S of the mounting brackets 14 and 15, i.e., movable between an open position and a closed position. And, a concave portion 17 is formed on the left side of the front portion of the side cowling 2e to be recessed inward of the motorcycle 1. With the left flap 10 closed, the air flow control plate 11 is stored within the concave portion 17 and an outer surface 12 of the air flow control plate 11 and an outer surface of a portion of the side cowling 2 which is located rearward relative to the air flow control plate 11 form a substantially continuous outer surface.

In the same manner, the right flap 20 is provided on the right side of the front portion of the side cowling 2e with the long side where the mounting brackets 24 and 25 are mounted directed forward. The mounting brackets 24 and 25 are coupled to the side cowling 2e to allow the right flap 20 to be pivotable. Specifically, the right flap 20 is configured such that the air flow control plate 21 extending rearward from the mounting brackets 24 and 25 is pivotable around a pivot S of the mounting brackets 24 and 25, i.e., movable between an open position and a closed position. And, a concave portion 27 is formed on the left side of the front portion of the side cowling 2e to be recessed inward of the body of the motorcycle 1. With the right flap 20 closed, the air flow control plate 21 is stored within the concave portion 27 and an outer surface 22 of the air flow control plate 21 and an outer surface of a portion of the side cowling 2e which is located rearward relative to the air flow control plate 21 form a substantially continuous surface.

As shown in Fig. 4, the drive device 30 is stored within the side cowling 2e. The drive device 30 includes a motor 31, a pinion gear 32, a rack 33, a first sensor 34 located at the front, a second sensor 35 located at the rear, a control portion 36, and a case 37 that stores these components. As the motor 31, a stepping motor is used. An output shaft of the motor 31 extends in a lateral direction of the body of the motorcycle 1, and a pinion gear 32 is mounted on an end portion of the output shaft. The rack 33 is provided to mesh with the pinion gear 32. The motor 31 drives the rack 33 to cause the rack 33 to reciprocate forward and backward. The motor 31 is connected to the control portion 36 through a signal wire (not shown), and operates based on a signal given by the control portion 36.

As shown in Fig. 4, an element 38 to be detected by the first and second sensors 34 and 35 is attached to a front end portion of the rack 33. The element 38 is formed by a magnetic body. The element 38 reciprocates forward and backward along with the rack 33. The first and second sensors 34 and 35 are configured to detect magnetism. The first and second sensors 34 and 35 are provided close to a locus of the element 38 moving along with the rack 33. The first and second sensors 34 and 35 are positioned to be spaced a predetermined distance from each other. The first sensor 34 is configured to detect magnetism of the element 38 with the rack 33 located at a forefront position. The second sensor 35 is configured to detect magnetism of the element 38 with the rack 33 located at a rearmost position. The first and second sensors 34 and 35 are each connected to the control portion 36 though a signal wire (not shown) and each configured to output a signal to the control portion 36 upon detecting the magnetism of the element 38.

The control portion 36 is configured to operate based on an electric power supplied from a battery 39b. The operation of the control portion 36 is determined based on a signal from a switch 39s connected to the control portion 36 through a signal wire. Specifically, when the switch 39s is turned off, the control portion 36 drives the motor 31 to cause the rack 33 to move forward until the control portion 36 receives a signal indicating that the first sensor 34 has detected the magnetism of the element 38, from the first sensor 34. On the other hand, when the switch 39s is tuned on, the control portion 36 drives the motor 31 to cause the rack 33 to move rearward until the control portion 36 receives a signal indicating that the second sensor 35 has detected the magnetism, from the second sensor 35. The switch 39s is positioned for the rider 8 to easily operate, for example, in the vicinity of the grip 7 of the handle bar 6 of the motorcycle shown in Fig. 1.

As shown in Fig. 4, the rack 33 of the drive device 30 is coupled to the left flap 10 and to the right flap 20 by means of a link mechanism 50. The link mechanism 50 includes a T-shaped link member 51 having three end portions. A center portion 51d of the link member 51 is connected to a front end portion of the case 37 of the drive device 30 to allow the link member 51 to be supported pivotally around the center portion 51d. An extension rod 52 extends forward from the front end portion of the rack 33. A front end portion of the extension rod 52 is connected to a first end portion 51a of the link member 51. In this connected state, the link member 51 is pivotable around the center portion 51d according to the movement of the rack 33. One end portion of a left rod 53 is connected to a second end portion 51b of the link member 51 to allow the left rod 53 to be pivotable, and an opposite end portion thereof is connected a tip end portion of the arm 16 of the left flap 10 to allow the left rod 53 to be pivotable. And, one end portion of a right rod 54 is connected to a third end portion 51 c of the link member 51 to allow the right rod 54 to be pivotable, and an opposite end portion thereof is connected a tip end portion of the arm 26 of the right flap 20 to allow the right rod 54 to be pivotable.

The air flow control system 40 constructed as described above, operates as described below according to an operation of the switch 39s operated by the rider 8. Upon the rider 8 tuning off the switch 39s, the control portion 36 drives the motor 31 to cause the rack 33 to be held at a position where the first sensor 34 detects magnetism of the element 38. As a result, the left flap 10 and the right flap 20 operate in cooperation with the rack 33 by a function of the link mechanism 50 and respectively pivot to move to be stored within the left concave portion 17 and the right concave portion 27 of the side cowling 2e to form a closed configuration as shown in Fig. 4 (see Fig. 1).

In the closed configuration, as shown in Fig. 4, the outer surface 12 of the air flow control plate 11 of the left flap 10 and the outer surface of a portion of the left part of the side cowling 2e which is located rearward relative to the air flow control plate 11 extend along substantially the same plane such that these outer surfaces conform in shape to an air flow line 60a. Likewise, the outer surface 22 of the air flow control plate 21 of the right flap 20 and the outer surface of a portion of the right part of the side cowling 2e which is located rearward relative to the air flow control plate 21 extend along substantially the same plane such that these outer surfaces conform in shape to the air flow line 60a. Consequently, as shown in Fig. 1, the rider 8 travelling on the motorcycle 1 travels with the wind directly applied to a lower body 8a of the rider 8.

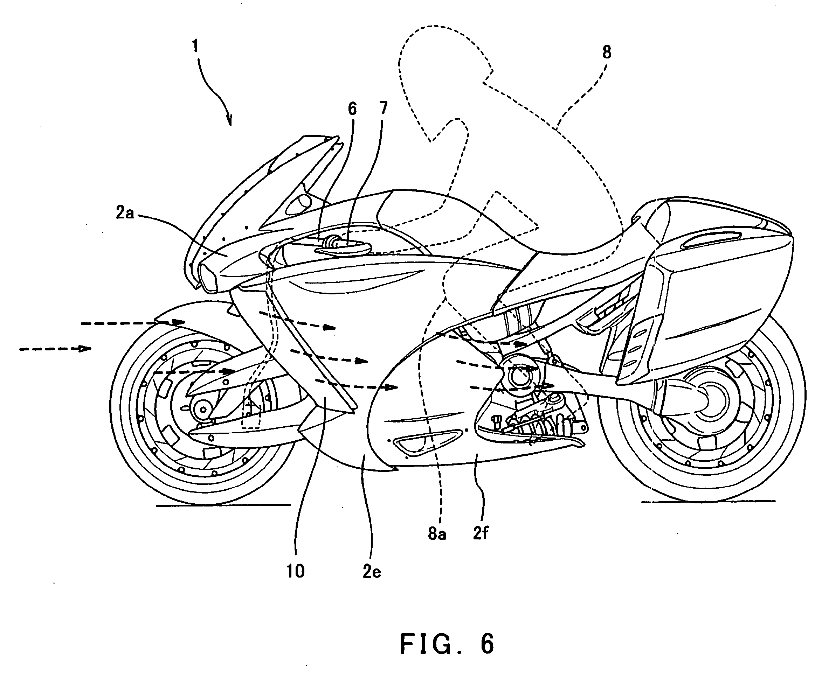

On the other hand, as shown in Fig. 5, upon the switch 39s being turned on by the rider 8, the control portion 36 drives the motor 31 to cause the rack 33 to be held at a position where the second sensor 35 detects magnetism of the element 38. As a result, as shown in Fig. 5, the left flap 10 and the right flap 20 pivot to move outward from the concave portions 17 and 27 of the side cowling 2e to open positions to form an open configuration (see Fig. 6).

In the open configuration, an air flow line 60b along the outer surface 12 of the air flow control plate 11 of the left flap 10 is located outward away from the outer surface of the portion of the left part of the side cowling 2e which is located rearward relative to the air flow control plate 21, and the air flow line 60b along the outer surface 22 of the air flow control plate 21 of the right flap 20 is located outward away from the outer surface of the right part of the side cowling 2e. Under this condition, as shown in Fig. 5, the left flap 10 and the right flap 20 allow the air flowing from forward to be guided rearward along the flow lines 60b and an outer side of the lower body 8a of the rider 8 (see Fig. 6). As a result, the wind from forward applied to the lower body 8a of the rider 8 can be reduced.

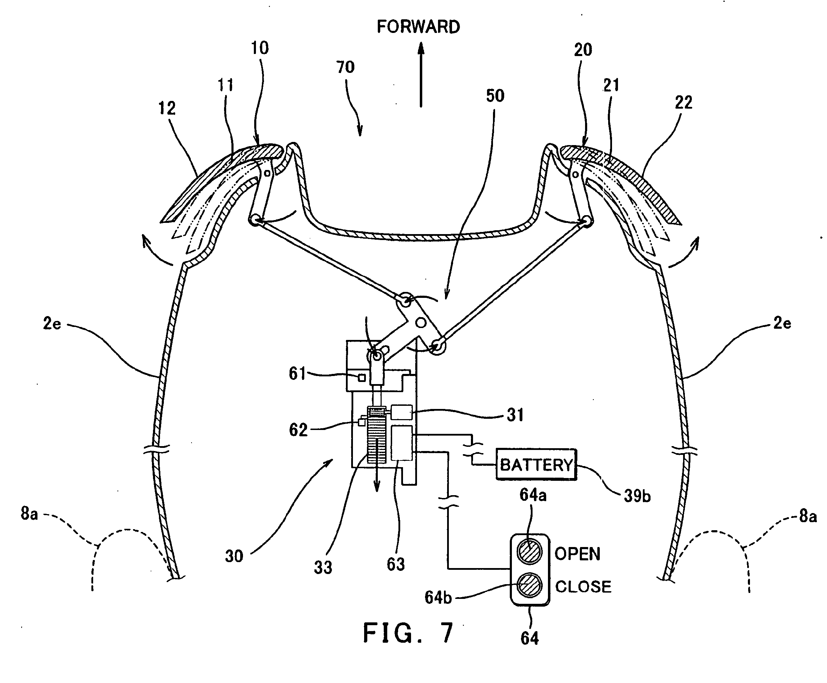

While the left flap 10 and the right flap 20 may be changed in two steps, i.e., between the open configuration and the closed configuration, they may alternatively be changed in multiple steps or steplessly (or continuously). Fig. 7 shows a construction of an air flow control system 70 configured to open and close the left flap 10 and the right flap 20 steplessly (or continuously). In the air flow control system 70 shown in Fig. 7, the first sensor 34, the second sensor 35, and the element 38 in the air flow control system 40 in Fig. 4 are omitted, and the control portion 36 and the switch 39s in the system 40 are replaced by a control portion 63 and a switch 64.

The left flap 10 and the right flap 20 are fully closed when the rack 33 comes in contact with a first stopper 61 located at the front, and stored within the concave portions 17 and 27 of the side cowling 2e. On the other hand, the left flap 10 and the right flap 20 are fully opened when the rack 33 comes in contact with a second stopper 62 located at the rear, and the air flow control plates 11 and 21 pivot to move away from the outer surface of the side cowling 2e outward to their outermost positions.

The switch 64 has an open button 64a and a close button 64b. The open button 64a is configured to output a signal to the control portion 63 while being pressed, and the control portion 63 causes the motor 31 to be driven to rotate in a direction, thereby moving the rack 33 rearward, only while the control portion 63 is receiving this signal. The close button 64b is configured to output a signal to the control portion 63 while being pressed, and the control portion 63 causes the motor 31 to be driven to rotate in an opposite direction, thereby moving the rack 33 forward, only while the control portion 63 is receiving this signal. In this configuration, the left flap 10 and the right flap 20 are opened or closed based on a time period during which the rider 8 is pressing the open button 64a or the close button 64b. Therefore, open positions of the left flap 10 and the right flap 20 can be adjusted steplessly.

While the above air flow control systems 40 and 70 are configured to operate the left flap 10 and the right flap 20 according to a switch operation performed by the rider 8, the configuration of the air flow system is not limited to those of the systems 40 and 70 stated above. For example, an air flow control system may be configured to operate air flow control members to allow the air flow control members to move to open positions when detecting that an engine speed is not less than a predetermined engine speed at which a relatively large wind pressure is applied to the rider and detecting a brake operation based on an oil pressure.

As this invention may be embodied in several forms without departing from the essential characteristics thereof, the present embodiment is therefore illustrative and not restrictive, since the scope of the invention is defined by the appended claims.

## Claims

1. An air flow control system (40, 70) of a motorcycle (1), comprising:
a flap (10; 20) configured to cover a part of a body of the motorcycle (1) and including an air flow control plate (11; 21);
a drive device (30) configured to drive the flap (10; 20); and
a cowling (2) configured to cover side portion of a front portion of the body,
wherein the air flow control plate (11; 21) is provided on a lateral side of a front portion of the cowling (2), the air flow control plate (11; 21) being pivotable around a vicinity of a front end portion thereof such that a rear end portion thereof moves close to or away from the cowling (2);
wherein the drive device (30) is configured to drive the flap (10; 20) such that the flap (10; 20) changes an air flow along the cowling (2) during travelling; and
wherein the flap (10; 20) is configured to vary its state between a closed configuration and an open configuration, wherein in the open configuration of the flap (10; 20), the outer surface of the air flow control plate (11; 21) is located outward relative to the outer surface of the rear portion of the cowling (2),
the air flow control system **characterized in that:**
when in the closed configuration of the flap (10; 20), an outer surface of the air flow control plate (11; 21) and an outer surface of the rear portion of the cowling (2) which is located rearward relative to the air flow control plate (11; 21) extend along substantially a same plane to form a continuous surface.

2. The air flow control system (40, 70) according to claim 1, further comprising a concave portion (17; 27) configured to be formed on the lateral side of the front portion of the cowling (2) to be recessed inward of the body of the motorcycle (1), wherein in the closed configuration of the flap (10; 20), the air flow control plate (11; 21) is configured to be stored within the concave portion (17; 27).

3. The air flow control system (40, 70) according to claim 1, wherein the air flow control plate is formed to be of a flat and rectangular shape and elongated in a vertical direction.

4. The air flow control system (40, 70) according to claim 1,
wherein the flap (10; 20) is one of right and left flaps (10, 20) each including a support portion (14, 15; 24, 25) provided in the vicinity of the front end portion of the air flow control plate (10; 20) and pivotally supported by the cowling (2), and an arm portion (16; 26) extending from the air flow control plate (11; 21) inward relative to the cowling (2) and connected to the drive device (30) through a corresponding connecting rod (53; 54) of right and left connecting rods (53, 54); and
wherein the drive device (30) is disposed inward of the cowling (2) and in a substantially center position in a width direction of the body of the motorcycle (1) and is configured to cause the right and left hand flaps (10, 20) to respectively operate simultaneously via the right and left connecting rods (53, 54).

5. The air flow control system (40, 70) according to claim 3, further comprising a switch (39s, 64) configured to be positioned in the vicinity of a grip (7) of an handle bar (6) of the motorcycle (1), wherein the flap (10; 20) is controlled to open and close based on a signal from the switch (39s, 64).

6. The air flow control system (70) according to claim 4, wherein the drive device (30) is capable of adjusting an open position of the flap (10; 20) steplessly.

## Patentansprüche

1. Luftströmungssteuersystem (40, 70) eines Motorrades (1), das Folgendes umfasst:
eine Klappe (10; 20), die dafür konfiguriert ist, einen Teil eines Aufbaus des Motorrades (1) zu bilden, und eine Luftströmungssteuerplatte (11; 21) enthält;
eine Antriebsvorrichtung (30), die dafür konfiguriert ist, die Klappe (10; 20) anzutreiben; und
eine Verschalung (2), die dafür konfiguriert ist, einen Seitenabschnitt eines Vorderabschnitts des Aufbaus abzudecken,
wobei die Luftströmungssteuerplatte (11; 21) auf einer Seite eines Vorderabschnitts der Verschalung (2) angeordnet ist, wobei die Luftströmungssteuerplatte (11; 21) dergestalt um eine Nähe ihres Vorderendabschnitts geschwenkt werden kann, dass sich ihr Hinterendabschnitt nahe an die Verschalung (2) heranbewegt oder von der Verschalung (2) fortbewegt;
wobei die Antriebsvorrichtung (30) dafür konfiguriert ist, die Klappe (10; 20) so anzutreiben, dass die Klappe (10; 20) eine Luftströmung entlang der Verschalung (2) während des Fahrens verändert; und
wobei die Klappe (10; 20) dafür konfiguriert ist, ihren Zustand zwischen einer geschlossenen Konfiguration und einer offenen Konfiguration zu ändern, wobei in der offenen Konfiguration der Klappe (10; 20) die Außenseite der Luftströmungssteuerplatte (11; 21) relativ zu der Außenseite des hinteren Abschnitts der Verschalung (2) auswärts angeordnet ist,
wobei das Luftströmungssteuersystem **dadurch gekennzeichnet ist, dass:**
wenn sich die Klappe (10; 20) in der geschlossenen Konfiguration befindet, sich eine Außenseite der Luftströmungssteuerplatte (11; 21) und eine Außenseite des hinteren Abschnitts der Verschalung (2), der hinter der Luftströmungssteuerplatte (11; 21) angeordnet ist, entlang im Wesentlichen derselben Ebene erstrecken, um eine durchgehende Oberfläche zu bilden.

2. Luftströmungssteuersystem (40, 70) nach Anspruch 1, das des Weiteren einen konkaven Abschnitt (17; 27) umfasst, der auf der Seitenfläche des Vorderabschnitts der Verschalung (2) dergestalt ausgebildet ist, dass er einwärts des Aufbaus des Motorrades (1) zurückspringt, wobei die Luftströmungssteuerplatte (11; 21) in der geschlossenen Konfiguration der Klappe (10; 20) dafür konfiguriert ist, in dem konkaven Abschnitt (17; 27) aufgenommen zu werden.

3. Luftströmungssteuersystem (40, 70) nach Anspruch 1, wobei die Luftströmungssteuerplatte eine flache und rechteckige Form aufweist und in einer vertikalen Richtung eine längliche Form aufweist.

4. Luftströmungssteuersystem (40, 70) nach Anspruch 1,
wobei die Klappe (10; 20) aus einer rechten und einer linken Klappe (10, 20) besteht, die jeweils einen Stützabschnitt (14, 15; 24, 25) enthalten, der in der Nähe des Vorderendabschnitts der Luftströmungssteuerplatte (10; 20) angeordnet ist und an der Verschalung (2) angelenkt ist, und einen Armabschnitt (16; 26) enthalten, der sich von der Luftströmungssteuerplatte (11; 21) einwärts der Verschalung (2) erstreckt und mit der Antriebsvorrichtung (30) über eine entsprechende Verbindungsstange (53; 54) aus einer rechten und einer linken Verbindungsstange (53, 54) verbunden ist; und
wobei die Antriebsvorrichtung (30) einwärts der Verschalung (2) und im Wesentlichen in einer mittigen Position in einer Breitenrichtung des Aufbaus des Motorrades (1) angeordnet ist und dafür konfiguriert ist zu bewirken, dass die rechte und die linke Klappe (10, 20) gleichzeitig über die rechte bzw. die linke Verbindungsstange (53, 54) betätigt werden.

5. Luftströmungssteuersystem (40, 70) nach Anspruch 3, das des Weiteren einen Schalter (39s, 64) umfasst, der dafür konfiguriert ist, in der Nähe eines Griffes (7) einer Lenkstange (6) des Motorrades (1) angeordnet zu werden, wobei die Klappe (10; 20) so gesteuert wird, dass sie sich auf der Grundlage eines Signals von dem Schalter (39s, 64) öffnet und schließt.

6. Luftströmungssteuersystem (70) nach Anspruch 4, wobei die Antriebsvorrichtung (30) in der Lage ist, eine offene Position der Klappe (10; 20) stufenlos zu verstellen.

## Revendications

1. Système de réglage de flux d'air (40, 70) pour une motocyclette (1), comprenant :
un volet (10; 20) conçu pour couvrir une partie d'un corps de la motocyclette (1) et comprenant une plaque de réglage de flux d'air (11; 21) ;
un dispositif de commande (30) conçu pour commander le volet (10; 20) ; et
un tablier (2) conçu pour couvrir une portion latérale d'une partie avant du corps,
dans lequel la plaque de réglage de flux d'air (11; 21) est disposée sur un pan latéral d'une partie avant du tablier (2), la plaque de réglage de flux d'air (11; 21) étant apte à pivoter au voisinage de sa partie d'extrémité avant afin que sa partie d'extrémité arrière se rapproche ou s'éloigne du tablier (2) ;
dans lequel le dispositif de commande (30) est conçu pour commander le volet (10; 20) afin que ce dernier modifie un flux d'air le long du tablier (2) en cours de roulage ; et
dans lequel le volet (10; 20) est conçu pour que son état varie entre une configuration fermée et une configuration ouverte, configuration ouverte du volet (10; 20) dans laquelle la surface extérieure de la plaque de réglage de flux d'air (11; 21) est située à l'extérieur par rapport à la surface extérieure de la partie arrière du tablier (2),
le système de réglage de flux d'air étant **caractérisé en ce que :**
dans la configuration fermée du volet (10; 20), une surface extérieure de la plaque de réglage de flux d'air (11; 21) et une surface extérieure de la partie arrière du tablier (2) qui est située en arrière par rapport à la plaque de réglage de flux d'air (11; 21) s'étendent sensiblement le long d'un même plan pour former une surface continue.

2. Système de réglage de flux d'air (40, 70) selon la revendication 1, comprenant également une partie concave (17; 27) conçue pour être formée sur le pan latéral de la partie avant du tablier (2) afin de définir un renfoncement vers l'intérieur du corps de la motocyclette (1), partie concave (17; 27) à l'intérieur de laquelle la plaque de réglage de flux d'air (11; 21) est conçue pour être logée dans la configuration fermée du volet (10; 20).

3. Système de réglage de flux d'air (40, 70) selon la revendication 1, dans lequel la plaque de réglage de flux d'air est conformée pour avoir une forme plane et rectangulaire allongée dans une direction verticale.

4. Système de réglage de flux d'air (40, 70) selon la revendication 1,
dans lequel le volet (10; 20) est l'un de volets droit et gauche (10, 20) comprenant chacun une partie de support (14, 14; 24, 25) disposée au voisinage de la partie d'extrémité avant de la plaque de réglage de flux d'air (11; 21) et supportée de manière pivotante par le tablier (2), et une partie formant bras (16; 26) qui s'étend à partir de la plaque de réglage de flux d'air (11; 21), à l'intérieur par rapport au tablier (2), et reliée au dispositif de commande (30) par l'intermédiaire d'une tige de liaison (53; 54) correspondante parmi des tiges de liaison droite et gauche (53, 54) ; et
dans lequel le dispositif de commande (30) est disposé à l'intérieur du tablier (2) et dans une position sensiblement centrale dans le sens de la largeur du corps de la motocyclette (1) et est conçu pour obliger les volets droit et gauche (10, 20) à fonctionner respectivement simultanément par l'intermédiaire des tiges de liaison droite et gauche (53, 54).

5. Système de réglage de flux d'air (40, 70) selon la revendication 3, comprenant également un commutateur (39s, 64) conçu pour être positionné au voisinage d'une poignée (7) d'un guidon (6) de la motocyclette (1), le volet (10; 20) étant réglé pour s'ouvrir et se fermer en fonction d'un signal provenant du commutateur (36s, 64).

6. Système de réglage de flux d'air (70) selon la revendication 4, dans lequel le dispositif de commande (30) est apte à ajuster une position ouverte du volet (10; 20) de manière continue.
